# EUROPÄISCHE PATENTANMELDUNG

(11) **EP 1 245 609 A1**
(43) Veröffentlichungstag der Anmeldung: **02.10.2002**
(21) Anmeldenummer: 02006518.1
(22) Anmeldetag: 19.03.2002
(51) Int. Cl.: C08G 73/10, D06M 15/59, D21H 17/54

(54) **Modifizierte Polyasparaginsäure**

(30) Priorität: 28.03.2001 DE 10115226
(71) Anmelder: BAYER AG, 51368 Leverkusen (DE)
(72) Erfinder: Klein, Thomas, Dr., 50678 Köln (DE); Schmidt, Holger, Dr., 41539 Dormagen (DE); Cordes, Monika, 51373 Leverkusen (DE); Klütsch, Manfred, 50827 Köln (DE)

(57) **Zusammenfassung**

Die vorliegende Erfindung betrifft ein neues Verfahren zur Herstellung modifizierter Polyasparaginsäuren ausgehend von C₄-Carbonsäuren und Stickstoff liefernden Verbindungen sowie Aminobenzoesäuren und die Verwendung dieser modifizierten Polyasparaginsäuren als optische Aufheller.

## Beschreibung

Die vorliegende Erfindung betrifft ein neues Verfahren zur Herstellung modifizierter Polyasparaginsäuren ausgehend von C₄-Carbonsäuren und Stickstoff liefernden Verbindungen sowie Aminobenzoesäuren und die Verwendung dieser modifizierten Polyasparaginsäuren als optische Aufheller.

Nachteilig an konventionellen Aufhellern ist ihre fehlende biologische Abbaubarkeit und in vielen Fällen das sogenannte "Spotting". Darunter wird allgemein das bevorzugte Aufziehen des Aufhellers auf stark gefärbte oder auf andere Weise modifizierte Flächen von Textilien insbesondere bei niedriger Temperatur verstanden. Es kommt dabei zu einer ungleichmäßigen Verteilung des Aufhellers auf der Oberfläche mit der resultierenden uneinheitlichen Aufhellung. Besonders charakteristisch ist das Ausbilden von punktuellen Bereichen, in denen der optische Aufheller gegenüber der umgebenden Oberfläche deutlich sichtbar angereichert ist. Eine Erhöhung der Wasserlöslichkeit des Aufhellers sollte diesem Effekt entgegenwirken.

Auch bei Anwendungen von optischen Aufhellern in der Papierherstellung ist eine biologische Abbaubarkeit aller Inhaltsstoffe von Bedeutung, da Papier auf Abfalldeponien entsorgt oder kompostiert werden kann. Außerdem spielt bei der Herstellung von Papier Wasser eine entscheidende Rolle, so dass auch hier eine verbesserte Löslichkeit des Aufhellers von Vorteil ist.

Aus EP-A 0 786 487 ist ein Verfahren zur Herstellung von Polyasparaginsäuren aus Ammoniumsalzen der Maleinsäure bekannt, worin die aus Maleinsäuresalzen hergestellte Reaktionslösung ohne Zusatz von Comonomeren bei Temperaturen von 140 bis 350°C zu Polysuccinimid polymerisiert, welches anschließend basisch zu Polyasparaginsäuresalzen hydrolysiert wird. Bekannt ist die Wirkung der Polyasparaginsäuren als Dispergiermittel, weshalb sie in DE-A 43 10 503 zum Dispergieren von optischen Aufhellern in Wasser eingesetzt wird. Die gemäß der EP-A 0 786 487 hergestellten nicht copolymerisierten Polyasparaginsäuren zeigen selber keine optisch aufhellenden Eigenschaften.

Aus JP-A 11 246 374 ist ein Mittel zur Aufhellung von Zähnen, das aus einem Copolymer von Phosphaten und Aminosäuren besteht, bekannt, das auf chemischem Weg die Verfärbung von Zahnschmelz verhindern und so den Anteil an abrasiven Zusätzen in Zahnkosmetika senken soll. Polyasparaginsäuren werden darin nicht benannt.

Aufgrund der hervorragenden biologischen Eigenschaften hinsichtlich des Abbauverhaltens der Polyasparaginsäuren bestand die Aufgabe der vorliegenden Erfindung darin, Polyasparaginsäuren derart zu modifizieren, dass diese selber in wässrigen oder organischen Lösungen als optische Aufheller eingesetzt werden können.

Aus US-A 4 696 981 ist der Einbau fremder Aminosäuren in Polyasparaginsäuren, die über eine Polymerisation von Ammoniumsalzen der Maleinsäure unter Einwirkung von Mikrowellen hergestellt werden, bekannt.

In DE-A 19 545 678 werden alkylmodifizierte Polyasparaginsäuren beschrieben, bei denen die Verknüpfung zwischen der Alkylgruppe und dem Polyasparaginsäurerückgrat über Estergruppen erfolgt.

In EP-A 0 959 091 wird die Umsetzung von Maleinsäuremonoamiden oder Ammoniumsalzen der Maleinsäuremonoamide zu hydrophobisierten Polyasparaginsäurederivaten ohne Zusatz von Ammoniumsalzen der Maleinsäure jedoch gegebenenfalls mit Zusatz von Aminen als Copolymere beschrieben.

Die gemäß dem Stand der Technik erhältlichen Copolymerisate der Polyasparaginsäuren zeigen zwar überwiegend eine gute biologische Abbaubarkeit und verbesserte Wasserlöslichkeiten, jedoch selber keine optisch aufhellenden Eigenschaften.

Es wurde nun gefunden, und darin besteht die Lösung der Aufgabe, dass Polyasparaginsäuren die mit Aminocarbonsäuren, bevorzugt aromatischen Aminocarbonsäuren, copolymerisiert werden, sowohl biologisch abbaubar sind, ein hohes Dispergiervermögen aufweisen aber zusätzlich im blauen Wellenlängenbereich fluoreszieren und darüber hinaus sich auf Fasern gleichmäßig aufziehen lassen, womit sie als optische Aufheller infrage kommen.

Die vorliegende Erfindung betrifft deshalb ein Verfahren zur Herstellung modifizierter Polyasparaginsäuren, dadurch gekennzeichnet, dass man
a) eine ungesättigte C₄-Dicarbonsäure A mit einer Stickstoff liefernden Verbindung B unter Erhalt eines Reaktionsgemisches, mit wenigstens einem niedermolekularen Reaktionsprodukt aus A und B, vorzugsweise mit einem Molekulargewicht Mw < 1300 g/mol, umsetzt,
b) anschließend das Reaktionsgemisch in einen kontinuierlich betriebenen Reaktor unter Zudosierung einer weiteren Stickstoff liefernden Verbindung C überführt,
c) das Reaktionsgemisch bei einer Temperatur von 120 bis 350°C unter Erhalt eines Polymeren mit wiederkehrenden Succinyleinheiten und Asparaginsäureamideinheiten mit einem Molekulargewicht Mw > 1300 g/mol behandelt und
d) das erhaltene Polymer mit einer wässrigen Lösung einer basischen Verbindung D unter Erhalt eines Polymeren mit wiederkehrenden Asparaginsäuresalz- und Asparaginsäureamid-Einheiten hydrolysiert.

Als C₄-Dicarbonsäuren A im Sinne der vorliegenden Erfindung kommen im Verfahrensschritt a) beispielsweise Maleinsäureanhydrid, Maleinsäure oder Fumarsäure, einzeln oder in Mischung miteinander, infrage.

Als Stickstoff-liefernde Verbindung B im Sinne der vorliegenden Erfindung sind Ammoniak oder Ammoniak freisetzende Verbindungen, insbesondere Ammoniumsalze und Amide der Kohlensäure wie beispielsweise Ammoniumhydrogencarbonat, Diammoniumcarbonat, Harnstoff, Ammoniumcyanat, Carbamidsäure oder Ammoniumcarbamid geeignet. Ebenfalls können auch andere organische und anorganische Ammoniumsalze eingesetzt werden. Diese Edukte können einzeln oder in Gemischen in Substanz oder in Lösung eingesetzt werden. Falls als Edukt B Ammoniak verwendet wird, kann dieses auch gasförmig verwendet werden.

Die Herstellung der Reaktionsgemische im Verfahrensschritt a) erfolgt vorzugsweise entweder durch die Umsetzung von Maleinsäureanhydrid mit Ammoniak oder Ammoniak-Derivaten oder durch die Umsetzung von Maleinsäureanhydrid zunächst mit Wasser zu Maleinsäure und anschließender Umsetzung mit Ammoniak oder Ammoniak-Derivaten. In einer besonders bevorzugten Ausführungsform wird Maleinsäureanhydrid mit Ammoniak oder Ammoniakderivaten zur Reaktion gebracht.

Der erste Reaktionsschritt a) ist eine stark exotherme Reaktion. Durch eine effiziente Kühlung des Reaktionsgefäßes muß die entstehende Wärme abgeführt werden. Als Reaktionsbedingungen sind Temperaturen zwischen 60 und 250°C bevorzugt, insbesondere 70 bis 170°C und besonders bevorzugt 80 bis 150°C zu wählen. Die Verweilzeiten können zwischen 1 min und 20 Stunden variieren, sie liegen bevorzugt bei 2 min bis 3 Stunden. Die Drücke stellen sich spezifisch in Abhängigkeit von der Reaktionsführung bzw. der Temperatur ein.

Zur Durchführung des ersten Verfahrensschrittes a) sind insbesondere Reaktoren geeignet, die eine gute Regelung der Reaktionsbedingungen zulassen. Bevorzugt wird der erste Reaktionsschritt in einem diskontinuierlichen Rührkessel durchgeführt.

Das im ersten Verfahrensschritt a) erzeugte Reaktionsgemisch wird im zweiten Verfahrensschritt b) unter Zugabe einer Komponente C thermisch polymerisiert. Komponente C kann als Feststoff über ein Förderaggregat oder als Schmelze über eine Dosierpumpe dem Reaktionsgemisch zugesetzt werden. Als Komponente C (Comonomer) für den Einbau in Polyasparaginsäuren eignen sich besonders Aminocarbonsäuren. Bevorzugt im Sinne der vorliegenden Erfindung werden aromatische Aminocarbonsäuren, deren aromatische Gruppe aus mono- oder polycyclischen Systemen mit oder ohne Heteroatomen besteht, eingesetzt. Außerdem kann der aromatische Rest zusätzliche saure Gruppen wie Sulfonsäuregruppen oder Phosphonsäuregruppen tragen. In besonders bevorzugter Weise ist 2-Aminobenzoesäure als Zusatz zur Monomermasse geeignet. Das Comonomer kann in Anteilen von 0,01 bis 75 mol-% der Reaktionsmischung zugesetzt werden.

Im Verfahrensschritt c) wird die aus Verfahrensschritt b) erhaltene Mischung anschließend in den Polymerisationsreaktor geleitet. Für die Polymerisation eignen sich vorzugsweise Apparate, die bei einer engen Verweilzeitverteilung der viskosflüssigen Phase die notwendige Mindestverweilzeit zur Polymerisation bereitstellen, die nötige Temperaturführung und gleichzeitig eine zumindest partielle Verdampfung des Lösungsmittels, insbesondere des Wassers sowie des bei der Reaktion gebildeten Wassers ermöglichen. Solche bevorzugten Vorrichtungen können beispielsweise
- Verweilrohre
- Hochviskosreaktoren, wie z.B. in EP-A 0 612 784 A1 beschrieben
- Trockner wie z.B. in DE-A-4 425 952 beschrieben
- Rührkesselkaskade
- Dünnschichtverdampfer
- Mehrphasen-Wendelrohr-Reaktoren
sein, wobei diese einzeln oder in Kombination miteinander eingesetzt werden können.

Sofern das Reaktionsgemisch eine Kombination von zwei Reaktoren zur Polymerisation nacheinander durchläuft, kann Komponente C vor dem ersten Reaktor, vor dem zweiten Reaktor aber auch vor beiden Reaktoren zudosiert werden.

Die Wärmeabfuhr oder Wärmezufuhr am Reaktor wird so gesteuert, dass der zweite Reaktionsschritt je nach Art und Konzentration der verwendeten Stoffe bei 120 bis 350°C, bevorzugt bei 140 bis 300°C und besonders bevorzugt bei 140 bis 270°C stattfindet. Die Verweilzeiten in dem für den Verfahrensschritt c) zu verwendenden Reaktorsystem betragen bis zu 120 Minuten, bevorzugt sind Verweilzeiten von bis zu 30 Minuten. Die Verweilzeit wird vorzugsweise so gewählt, dass eine möglichst vollständige Polymerisation erfolgt. Die erhaltenen Reaktionsprodukte sind je nach Wasser- bzw. Lösungsmittelgehalt Lösungen, Schmelzen oder Feststoffe.

Die so erhaltenen Polymere werden schließlich im Verfahrensschritt d) mit einer wässrigen alkalischen Lösung umgesetzt, wobei die im Polymer vorhandenen Succinimideinheiten teilweise oder vollständig in Aspartat-Einheiten umgewandelt werden. Bevorzugt wird eine wässrige Lösung von Ammoniak, Alkali- oder Erdalkalioxiden oder -hydroxiden, besonders bevorzugt wässrige Ammoniaklösung oder Natron- oder Kalilauge eingesetzt.

Dazu wird in einem Reaktionskessel mit Rührvorrichtung eine Lösung von Ammoniak oder eines Alkali- oder Erdalkalihydroxydes in Wasser vorgelegt, in die das Polymerisat aus dem Verfahrensschritt c) eingebracht wird. Die Alkalimenge kann äquimolar bezogen auf die Succinyleinheiten im eingetragenen Polymer oder im Unterschuß bemessen sein. Im zweiten Fall resultiert ein Polyaspartat mit noch unveränderten Succinimideinheiten. Die Verweilzeit der Hydrolysemischung im Kessel liegt zwischen 10 Minuten und 24 Stunden, bevorzugt zwischen 30 Minuten und 12 Stunden. Die Umsetzung findet bei Temperaturen zwischen 50 und 150°C, bevorzugt zwischen 60 und 140°C statt.

Die vorliegende Erfindung betrifft deshalb auch modifizierte Polyasparaginsäuren, erhältlich durch
a) Umsetzen einer ungesättigten C₄-Dicarbonsäure A mit einer Stickstoff liefernden Verbindung B unter Erhalt eines Reaktionsgemisches, enthaltend wenigstens ein niedermolekulares Reaktionsprodukt aus A und B, vorzugsweise mit einem Molekulargewicht Mw < 1300 g/mol,
b) Überführen des Reaktionsgemisches in einen kontinuierlich betriebenen Reaktor unter Zudosierung einer weiteren Stickstoff liefernden Verbindung C,
c) Behandeln des Reaktionsgemisches bei einer Temperatur von 120 bis 350°C unter Erhalt eines Polymeren mit wiederkehrenden Succinyleinheiten und Asparaginsäureamideinheiten mit einem Molekulargewicht Mw > 1300 g/mol und
d) Hydrolysieren des erhaltenen Polymers mit einer wässrigen Lösung einer basischen Verbindung D unter Erhalt eines Polymeren mit wiederkehrenden Asparaginsäuresalz- und Asparaginsäureamid-Einheiten.

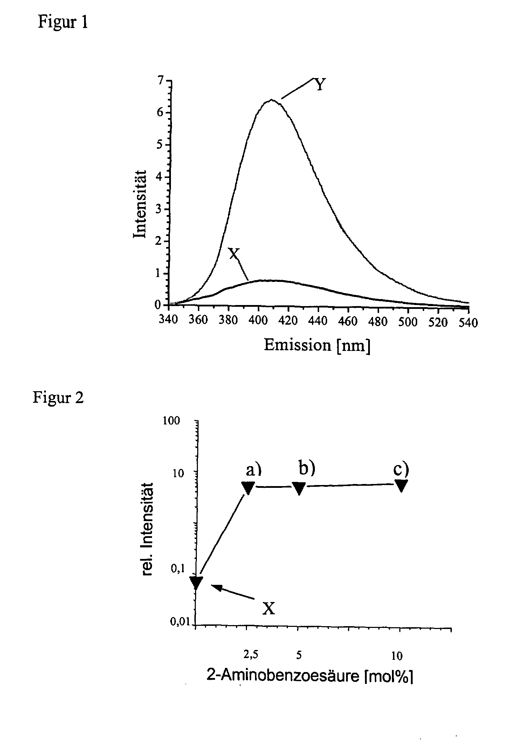

Das erfindungsgemäße Verfahren führt im Falle der 2-Aminobenzoesäure als Comonomer zu Copolymeren mit der beispielhaften Formel (I) in Abbildung 1.

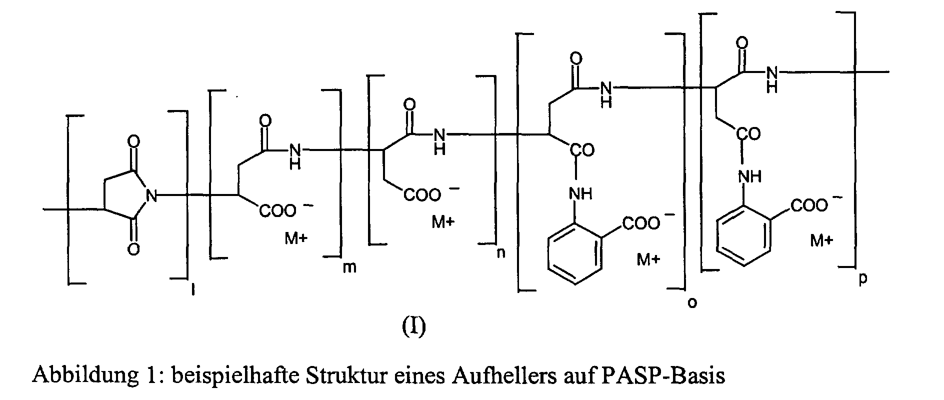

In der Formel (I) stehen
- M: für ein Alkali- oder Erdalkalimetall, bevorzugt Lithium, Natrium, Kalium, Magnesium, Calcium, Strontium oder Barium und
- l, m, n, o, p: stehen jeweils unabhängig voneinander für 0,001 bis 0,996 molare Anteile aller Polymerbausteine, wobei die Summe aus l+m+n+o+p = 1 ist.

Die Verknüpfung der Aminobenzoesäureeinheiten mit der Polymerhauptkette über Amidbindungen bleibt während der basischen Hydrolyse der Succinimideinheiten bestehen. Polymerisation und Hydrolyse können sowohl batchweise als auch kontinuierlich betrieben werden. Im Anschluss an die basische Hydrolyse der Succinimideinheiten im Polymerisat kann die erhaltene Lösung durch Zugabe von Wasserstoffperoxid farblich aufgehellt werden.

Die gemäß dem erfindungsgemäßen Verfahren erhältlichen modifizierten Polyasparaginsäuren zeigen überraschenderweise Fluoreszenz, die es ermöglicht, sie als optische Aufheller einzusetzen.

Die Erfindung betrifft deshalb auch die Verwendung der modifizierten Polyasparaginsäure, hergestellt gemäß dem oben beschriebenen Verfahren als optische Aufheller in Textilien, Papier, Farben, Lackschichten, Kunststoffen, Zahnschmelz etc.

Sie können eingesetzt werden bei der Herstellung, Verarbeitung, Reinigung oder Pflege von Textilien, Papier, Farben, Lackschichten, Kunststoffen oder Zähnen.

Als Textilien im Sinne der vorliegenden Erfindung seien beispielhaft Baumwolle, Viscose, Wolle, Polyester, Polyamid, Polyacrylnitril oder Polypropylenfasern genannt.

Die vorliegende Erfindung betrifft deshalb auch Mittel zur Textilherstellung und -pflege, Papierherstellung, Farb- oder Lackpflege, Kunststoffherstellung und -pflege sowie Zahnpflege, dadurch gekennzeichnet, dass diese einen optisch aufhellenden Anteil an modifizierten Polyasparaginsäuren, hergestellt nach dem erfindungsgemäßen Verfahren, enthalten.

Besonders bevorzugt betrifft die vorliegende Erfindung Waschmittel, Anstrichpflegemittel, Kosmetika oder Zahnpflegemittel enthaltend 1 bis 50 000 ppm, bevorzugt 10 bis 5 000 ppm, besonders bevorzugt 100 bis 1 000 ppm, modifizierte Polyasparaginsäure, erhältlich durch das erfindungsgemäße Verfahren.

### Beispiele zur Herstellung modifizierter Polyasparaginsäure

### Beispiel 1

415,7 g Ammoniummaleat und 20,7 g 2-Aminobenzoesäure werden in einem Hochviskosreaktor bei 180 °C aufgeschmolzen und geknetet. Nach 30 bis 45 Minuten steigt die Viskosität der Schmelze, bis eine feste Masse entstanden ist. Der Feststoff wird in Natronlauge gelöst, wobei ein Natriumpoly(aspartat-co-aminobenzoat) gebildet wird, dessen Fluoreszenzaktivität größer ist, als die einer Ware ohne Comonomergehalt. Die Fluoreszenz wird über ein kommerziell erhältliches Fluorospektrometer, z.B. dem Spektrometer AB 2 der Fa. Polytec, Waldbronn, gemessen.
- Figur 1: zeigt die Wellenlängenabhängigkeit der Fluoreszenz von reiner Polyasparaginsäure X) und einem Polyasparaginsäure/2-Aminobenzoesäure Copolymer Y) in das 2,1 mol-% 2-Aminobenzoesäure einpolymerisiert sind. Zu erkennen ist, dass die Fluoreszenzmaxima der Polyasparaginsäure und des Copolymers bei nahezu gleicher Wellenlänge liegen.
- Figur 2: zeigt die Fluoreszenz unter gleicher Intensität der Anregung von Copolymeren mit
a) 2,5 mol-% 2-Aminobenzoesäure
b) 5 mol-% 2-Aminobenzoesäure
c) 10 mol-% 2-Aminobenzoesäure
   im Vergleich zu
X) reiner Polyasparaginsäure.

Die Intensität der Fluoreszenz der Copolymere übersteigt die der reinen Polyasparaginsäure um mehr als das 80-fache (s. untere Abbildung, Y-Achse logarithmisch).
Gemessen werden jeweils wässrige Lösungen mit 50 ppm optischem Aufheller bzw. Polyasparaginsäure. Der Graph zeigt den überaus überraschenden Effekt der fluoreszierenden Eigenschaften modifizierter Polyasparaginsäuren, die Aminocarbonsäuren als Comonomer einpolymerisiert enthalten.

### Beispiel 2

Reaktionsansatz nach Beispiel 1, wobei die Mischung in einem ungerührten Behälter bei 180°C aufgeschmolzen wird. Die Masse verfestigt sich unter Aufschäumen. Das Material wird ebenfalls in Natronlauge gelöst.

### Beispiele zur Verbesserung des Weißgrades

### Beispiel 3

Eine Gewebeprobe "BP 1" wird 30 min bei 40°C in einer erfindungsgemäßen, wässrigen PASP- Lösung, w(PASP)= 0,5 %, digeriert. Anschließend wird 10 min in VE-Wasser nachgerührt und über Nacht getrocknet (VE-Wasser = vollentsalztes Wasser).

Zwischen Original und behandeltem Material zeigte sich eine Aufhellung um 1,8.

| | **Weißgrad mit Filter** | **Ohne Filter** | **Aufhellung** |
|---|---|---|---|
| mit PASP | 70,7 | 144,0 | 73,3 |
| unbehandelt | 68,5 | 140,0 | 71,5 |
| *UV-Filter. Es wird der Weißgrad nach CIE verwendet. | | | |

### Beispiel 4

Mit Normgeweben (Polyacrylnitril, Polyester, Polyamid und Baumwolle) werden unter gleichen Versuchsbedingungen wie bei Beispiel 3 die Versuche wiederholt.
Es zeigen sich deutliche Aufhellungen.

| Baumwolle | | | |
|---|---|---|---|
| | **Weißgrad mit Filter** | **Ohne Filter** | **Aufhellung** |
| Unbehandelt | 67,7 | 67,9 | 0,2 |
| mit PASP + auswaschen | 69,4 | 70,1 | 0,7 |
| mit VE-Wasser | 68,6 | 68,9 | 0,3 |

| Polyacrylnitril | | | |
|---|---|---|---|
| | **Weißgrad mit Filter** | **Ohne Filter** | **Aufhellung** |
| unbehandelt | 36,9 | 37,1 | 0,2 |
| mit PASP + auswaschen | 35,7 | 38,9 | 3,2 |
| mit VE-Wasser | 36,9 | 37,3 | 0,4 |

| Polyester | | | |
|---|---|---|---|
| | **Weißgrad mit Filter** | **Ohne Filter** | **Aufhellung** |
| unbehandelt | 64 | 64,1 | 0,1 |
| mit PASP + auswaschen | 65,1 | 66,9 | 1,8 |
| mit VE-Wasser | 64,2 | 64,4 | 0,2 |

| Polyamid | | | |
|---|---|---|---|
| | **Weißgrad mit Filter** | **Ohne Filter** | **Aufhellung** |
| unbehandelt | 63 | 63,2 | 0,2 |
| mit PASP + auswaschen | 62,9 | 63,5 | 0,5 |
| mit VE-Wasser | 61,7 | 62,0 | 0,3 |

### Beispiel 5

### Versuchsbedingungen:

Mit den Substanzen PASP und erfindungsgemäßen PASP-Copolymer werden Versuche durchgeführt.

Jeweils fünf Lösungen mit unterschiedlichen Wirkstoffanteilen werden pro Substanz hergestellt. Jede Lösung hat einen gleichbleibenden Natriumsulfat-Anteil von 3 g pro Liter.

Diese Lösungen werden mittels eines Walzapparates auf Co- Popeline (Co = Cotton) aufgetragen und 30s bei 100°C getrocknet. Anschließend wird der Weißgrad ermittelt.
Alle Gewebestücke zeigen eine deutliche Aufhellung.

| Co - Popeline und PASP | | | |
|---|---|---|---|
| | **Weißgrad mit Filter** | **Ohne Filter** | **Aufhellung** |
| unbehandelt | 77,9 | 78,2 | 0,3 |
| 856 ppm | 77,9 | 79,9 | 2,0 |
| 1712 ppm | 77,3 | 79,3 | 2,1 |
| 2568 ppm | 77,3 | 78,2 | 2,0 |
| 4280 ppm | 76,3 | 77,5 | 2,4 |
| 6420 ppm | 72,4 | 74,9 | 2,6 |

| Co - Popeline und PASP-Copolymer | | | |
|---|---|---|---|
| | **Weißgrad mit Filter** | **Ohne Filter** | **Aufhellung** |
| unbehandelt | 77,9 | 78,1 | 0,2 |
| 440 ppm | 78,1 | 80,3 | 2,2 |
| 880 ppm | 77,0 | 79,4 | 2,3 |
| 1320 ppm | 76,6 | 79,6 | 3,0 |
| 2200 ppm | 75,0 | 78,2 | 3,2 |
| 3300 ppm | 74,2 | 77,9 | 3,7 |

| Co - Popeline und PASP | | | |
|---|---|---|---|
| | **Weißgrad mit Filter** | **Ohne Filter** | **Aufhellung** |
| unbehandelt | 77,9 | 78,1 | 0,2 |
| 100 ppm | 78,9 | 80,6 | 1,7 |
| 200 ppm | 78,8 | 80,4 | 1,6 |
| 300 ppm | 78,8 | 80,4 | 1,6 |
| 500 ppm | 78,6 | 80,3 | 1,7 |
| 750 ppm | 78,6 | 80,4 | 1,8 |

| Co - Popeline und PASP-Copolymer | | | |
|---|---|---|---|
| | **Weißgrad mit Filter** | **Ohne Filter** | **Aufhellung** |
| unbehandelt | 78,0 | 78,1 | 0,1 |
| 100 ppm | 79,0 | 80,6 | 1,6 |
| 200 ppm | 78,9 | 80,7 | 1,9 |
| 300 ppm | 78,6 | 80,4 | 1,8 |
| 500 ppm | 78,4 | 80,7 | 2,3 |
| 750 ppm | 77,6 | 80,0 | 2,4 |

## Patentansprüche

1. Verfahren zur Herstellung modifizierter Polyasparaginsäuren, **dadurch gekennzeichnet, dass** man
a) eine ungesättigte C₄-Dicarbonsäure A mit einer Stickstoff liefernden Verbindung B unter Erhalt eines Reaktionsgemisches, mit wenigstens einem niedermolekularen Reaktionsprodukt aus A und B umsetzt,
b) anschließend das Reaktionsgemisch in einen kontinuierlich betriebenen Reaktor unter Zudosierung einer weiteren Stickstoff liefernden Verbindung C überführt,
c) das Reaktionsgemisch bei einer Temperatur von 120 bis 350°C unter Erhalt eines Polymeren mit wiederkehrenden Succinyleinheiten und Asparaginsäureamideinheiten mit einem Molekulargewicht Mw >1300 g/mol behandelt und
d) das erhaltene Polymer mit einer wässrigen Lösung einer basischen Verbindung D unter Erhalt eines Polymeren mit wiederkehrenden Asparaginsäuresalz- und Asparaginsäureamid-Einheiten hydrolysiert.

2. Verfahren gemäß Anspruch 1, **dadurch gekennzeichnet, dass** als C₄-Dicarbonsäuren A Maleinsäureanhydrid, Maleinsäure oder Fumarsäure, einzeln oder in Mischung miteinander, eingesetzt werden.

3. Verfahren gemäß Anspruch 1, **dadurch gekennzeichnet, dass** als Stickstoff-liefernde Verbindung B Ammoniak oder Ammoniak freisetzende Verbindungen oder Ammoniumsalze oder Amide der Kohlensäure eingesetzt werden.

4. Verfahren gemäß der Ansprüche 1 bis 3, **dadurch gekennzeichnet, dass** in Verfahrensschritt a) das Reaktionsprodukt aus A und B ein Molekulargewicht M_{w} <1300 g/mol aufweist.

5. Verfahren gemäß Anspruch 1, **dadurch gekennzeichnet, dass** in Verfahrensschritt b) die Stickstoff liefernde Verbindung C eine Aminocarbonsäure ist.

6. Verfahren gemäß Anspruch 1, **dadurch gekennzeichnet, dass** im Verfahrensschritt d) als basische Verbindung D wässrige Lösungen von Amoniak, Alkali- oder Erdalkalioxiden oder Alkali- oder Erdalkalihydroxiden eingesetzt werden.

7. Modifizierte Polyasparaginsäuren, erhältlich durch
a) Umsetzen einer ungesättigten C₄-Dicarbonsäure A mit einer Stickstoff liefernden Verbindung B unter Erhalt eines Reaktionsgemisches, enthaltend wenigstens ein niedermolekulares Reaktionsprodukt aus A und B,
b) Überführen des Reaktionsgemisches in einen kontinuierlich betriebenen Reaktor unter Zudosierung einer weiteren Stickstoff liefernden Verbindung C,
c) Behandeln des Reaktionsgemisches bei einer Temperatur von 120 bis 350°C unter Erhalt eines Polymeren mit wiederkehrenden Succinyleinheiten und Asparaginsäureamideinheiten mit einem Molekulargewicht Mw > 1300 g/mol und
d) Hydrolysieren des erhaltenen Polymers mit einer wässrigen Lösung einer basischen Verbindung D unter Erhalt eines Polymeren mit wiederkehrenden Asparaginsäuresalz- und Asparaginsäureamid-Einheiten.

8. Verwendung der modifizierten Polyasparaginsäuren, hergestellt gemäß Anspruch 7 als optische Aufheller.

9. Verfahren zur Herstellung, Verarbeitung, Reinigung oder Pflege von Textilien, Papier, Farben, Lackschichten, Kunststoffen oder Zähnen, **dadurch gekennzeichnet, dass** modifizierte Polyasparaginsäuren gemäß Anspruch 7 als optische Aufheller eingesetzt werden.

10. Mittel zur Textilherstellung und -pflege, Papierherstellung, Farb- oder Lackherstellung und -pflege, **dadurch gekennzeichnet, dass** diese einen optisch aufhellenden Anteil modifizierter Polyasparaginsäure gemäß Anspruch 7 enthalten.
